# EUROPEAN PATENT SPECIFICATION

(11) **EP 2 277 386 B1**
(45) Date of publication and mention of the grant of the patent: **26.04.2017**
(21) Application number: 10169952.8
(22) Date of filing: 19.07.2010
(51) Int. Cl.: A23G 9/04, A23G 9/22, A23G 9/28

(54) **Machine for making and dispensing iced food products such as granitas, slush drinks and the like**
Maschine zum Herstellen und Ausgeben von eisartigen Lebensmitteln wie Granita, zerstoßenes Wassereis und ähnliches
Machine pour la fabrication et la distribution de produits alimentaires glacés tels que des granités, des barbotines et similaires

(30) Priority: 24.07.2009 IT BO20090490
(43) Date of publication of application: 26.01.2011
(73) Proprietor: Carpigiani Group - ALI S.p.A., 40011 Anzola Dell'Emilia (BO) (IT)
(72) Inventor: Morten, Marco, 40011 Anzola Dell'Emilia (Bologna) (IT); Cocchi, Gino, 40011 Anzola Dell'Emilia (Bologna) (IT)
(74) Representative: Bianciardi, Ezio

(56) References cited:
- EP-A1- 0 799 575
- EP-A1- 1 459 666
- EP-A1- 1 477 455
- EP-A2- 1 262 724
- WO-A1-03/082022
- ES-A1- 2 166 248
- JP-A- 11 253 105
- US-A- 4 575 255
- US-A- 6 082 123
- US-A- 6 095 677
- US-A- 6 163 095

## Description

This invention relates to a machine for making and dispensing iced food products such as granitas, slush drinks and the like.

Machines of this kind, commonly known as crushed-ice drink makers or slush machines, generally comprise a transparent tank, in which a fluid is mixed and chilled and eventually dispensed in the form of a granita or slush drink through a tap mounted at the front of the machine, near the bottom of the tank.

The tank is closed at the top by a removable lid and contains at the bottom of it a screw type stirring element and an evaporator of a cooling circuit.

The evaporator is cylindrical in shape and is coaxially surrounded by the stirrer, which is rotationally driven about its axis by an electric induction motor through a reduction gear unit in order to mix the product inside the tank and scrape the ice that would otherwise tend to form on the outside surface of the evaporator.

The tank is generally in the shape of a parallelepiped, with the exception of the bottom of it which is rounded in such a way as to partly surround the substantially cylindrical periphery of the stirrer-evaporator assembly and prevent the formation of zones of stagnant product.

Normally, in machines of this kind, the evaporator is mounted with its longitudinal axis disposed horizontally and the gear motor is mounted to face the rear longitudinal end of the evaporator, that is, the side opposite the tap.

More specifically, the motor is mounted near the bottom of the machine frame and the reduction gear unit, of a type with parallel gears, is housed in a rear, substantially vertical shoulder of the machine.

The stirrer drive shaft passes through the cavity in the evaporator and sealingly protrudes from the front of the evaporator.

A machine of this kind is described in patent EP 1262724 B1, to the Spanish company, Sencotel S.L., forming part of the same group of companies as the applicant.

Other machines of the kind described above are depicted in documents WO 03/082022-A1, EP 0799575-A1 and JP 11253105-A.

In the operation of these machines, the density of the product being processed must remain uniform and at an optimum level. In effect, the density value must not fall below the lower limit of acceptable quality for the product but at the same time must not exceed the upper limit where the stirrer would cause a motor overload.

For this purpose, the cooling circuit of these machines may not be controlled simply on the basis of the temperature of the product being processed. Indeed, the product consists of a mixture of water, sugar and additives maintained in a state of equilibrium between the liquid phase and the solid phase, and the density is a function of the relative percentage of the two phases. Since the change of state from the liquid phase to the solid phase occurs at a constant temperature, it is evidently impossible to check the state of equilibrium by measuring the temperature.

In the prior art, several systems are known for detecting the real density of the product being processed. Of these, the most widely used involves detecting the resistant torque acting on the stirrer.

One detecting system of this type is described in patent EP 799575 B1. In that patent, the gear motor is free to rotate in its entirety about the axis of its own shaft against the counteracting force of a spring. A sensor, for example a microswitch, is mounted near the gear motor to detect the degree of rotation of the motor and to disable the cooling circuit when the rotation of the whole gear motor exceeds a set value. The spring is calibrated in such a way that the microswitch is activated when the resistance encountered by the stirrer is higher than a predetermined limit, corresponding to the reference density of the product. Thus, when the density of the product exceeds the predetermined reference value, the torque produced by the motor causes the entire gear motor to rotate against the opposing action of the spring and the cooling circuit is disabled by the microswitch until the density of the product returns to an acceptable value.

The detection system described above is mechanically complex and involves precise calibration and periodic adjustment of the counteracting spring. Moreover, at the back of the machine, besides the above mentioned shoulder, the gear motor assembly, which is itself cumbersome and heavy, requires a sufficient space to enable it to turn under the action of the resistant torque.

This invention, therefore has for an aim to provide a machine for making and dispensing iced food products such as granitas, slush drinks and the like where the stirrer drive unit is compact, light, inexpensive and mechanically simple. Another aim of the invention, is to provide a machine for making and dispensing iced food products such as granitas, slush drinks and the like where the density and quality of the product being processed are easy to control.

This invention accordingly provides a machine for making and dispensing iced food products such as granitas, slush drinks and the like comprising the features defined in any of the appended claims.

The invention will now be described, by way of example only and without limiting its scope, with reference to the accompanying drawings, in which:
Figures 1 and 2 are, respectively, a front and a rear perspective view, with some parts cut away for clarity, showing an embodiment of the machine according to this invention;
Figure 3 shows a variant of the machine of Figures 1 and 2;
Figure 4 shows a detail from Figure 3;

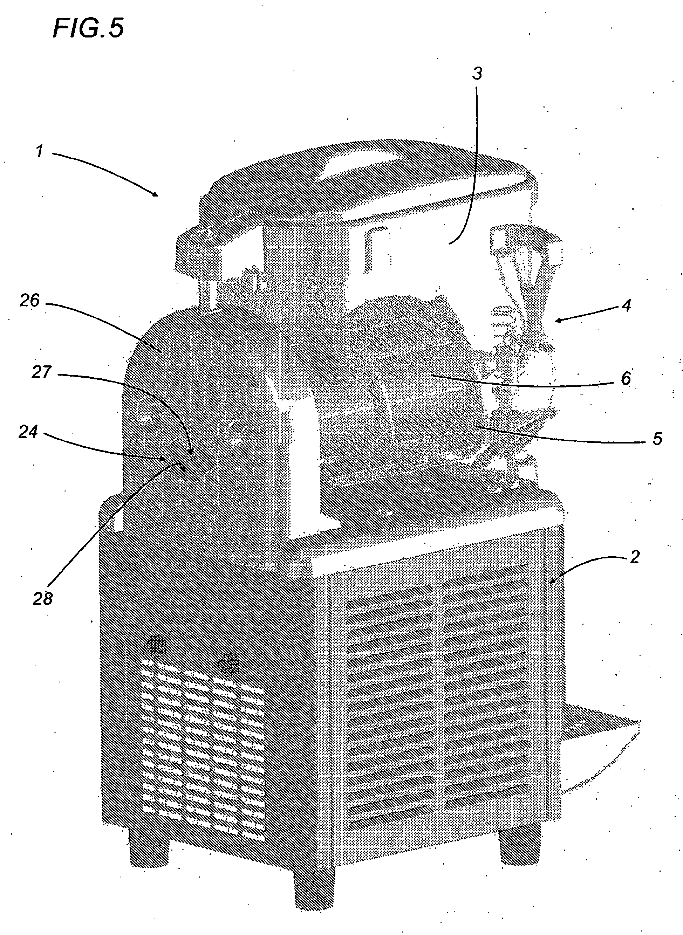

Figure 5 is another rear perspective view of the machine of Figure 1;
Figure 6 shows a scaled-up detail from Figure 5, with some parts in cross section for clarity; and
Figure 7 shows the detail of Figure 6 in a different operating position.

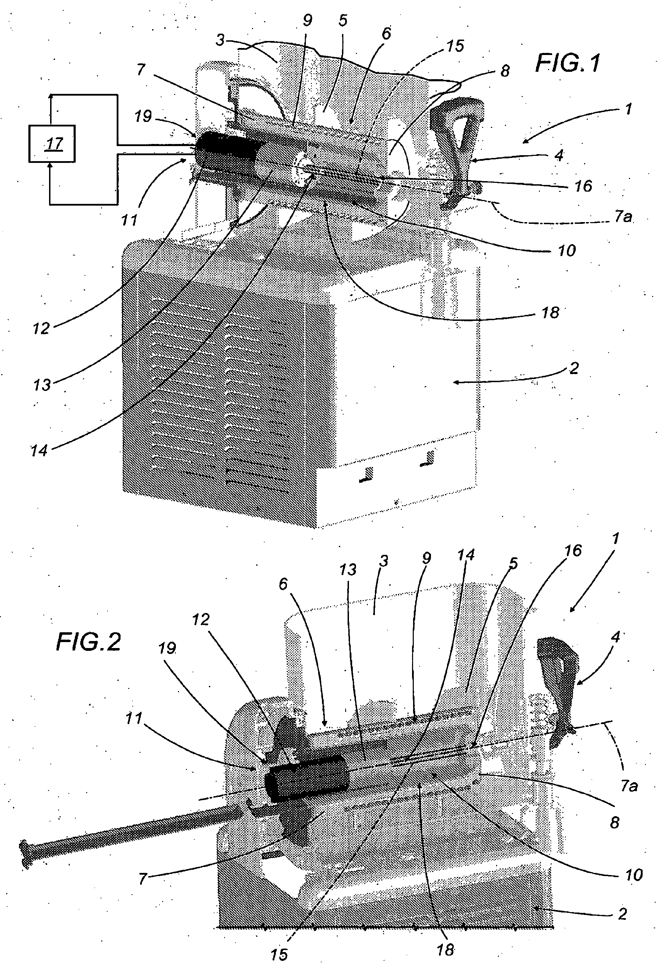

With reference to Figures 1 and 2, the reference numeral 1 denotes in its entirety a machine for making and dispensing iced food products such as granitas, slush drinks and the like.

The machine 1 comprises a base 2 that houses a customary cooling system, not illustrated.

Mounted on the base 2 is a transparent containment tank 3 in which a fluid is processed, or more specifically, mixed and chilled, and eventually dispensed in the form of a granita, slush drink or the like, through a tap 4 mounted at the front of the machine 1, near the bottom of the tank 3 itself. The bottom of the tank 3 houses a screw type stirring element 5 and an evaporator 6, the latter forming part of the above mentioned cooling circuit.

The evaporator 6 is substantially cylindrical in shape and is hollow inside. More specifically, the evaporator 6 has a substantially cylindrical tubular wall 7 which is closed at the front by a circular wall 8.

The wall 7 extends around a central, horizontally disposed, longitudinal axis 7a.

A cooling coil 9, forming part of the cooling circuit, extends helically about the axis 7a on the inside of the wall 7.

The walls 7 and 8 form a substantially cylindrical cavity 10 inside the evaporator 6.

The wall 7 is coaxially surrounded by the stirring element 5, which is rotationally driven about the axis 7a by a drive unit 11.

The drive unit 11 comprises an electric motor 12, usually a direct current motor, which in the embodiment described is a brushless motor but which could be of any other type, and drive transmission means 18 interposed between the electric motor 12 and the stirring element 5.

Hereinafter, the term electric motor 12 is used to mean everything housed inside the casing of the motor itself - in particular, the assembly made up of rotor, stator and windings - in order to generalize the type of motor used which, as mentioned above, may be of any type.

The drive transmission means 18 comprise a speed reduction gear unit 13, of epicyclic type, connected to the output of the motor 12.

The motor 12 is driven electronically by a control unit 17 of known type. The control unit 17 can increase or decrease the speed of the motor and/or reverse its direction of rotation according to predetermined programs and/or feedback based on signals from sensors (not illustrated). For example, one of the sensors might be a sensor for detecting the resistant torque. It should be noted that both reversal of the direction of rotation of the motor 12 and the variation of its speed can be performed manually by an operator.

The drive unit 11 is housed at least partly in the evaporator 6, that is, inside the cavity 10.

More specifically, the reduction gear unit 13 is housed entirely inside the cavity 10 and its output shaft 14 is coaxial with the evaporator 6, that is to say, it extends along the axis 7a.

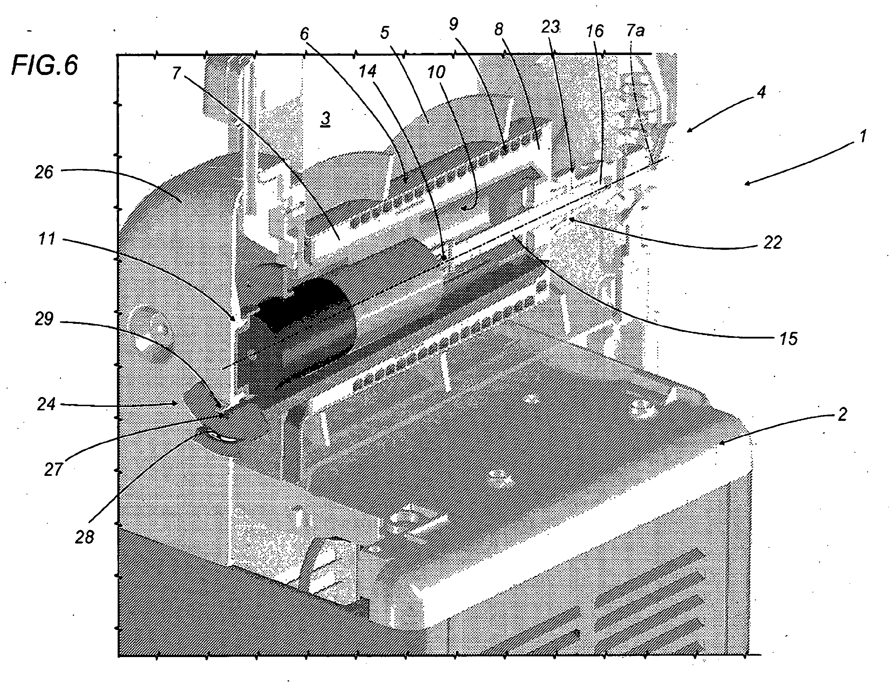

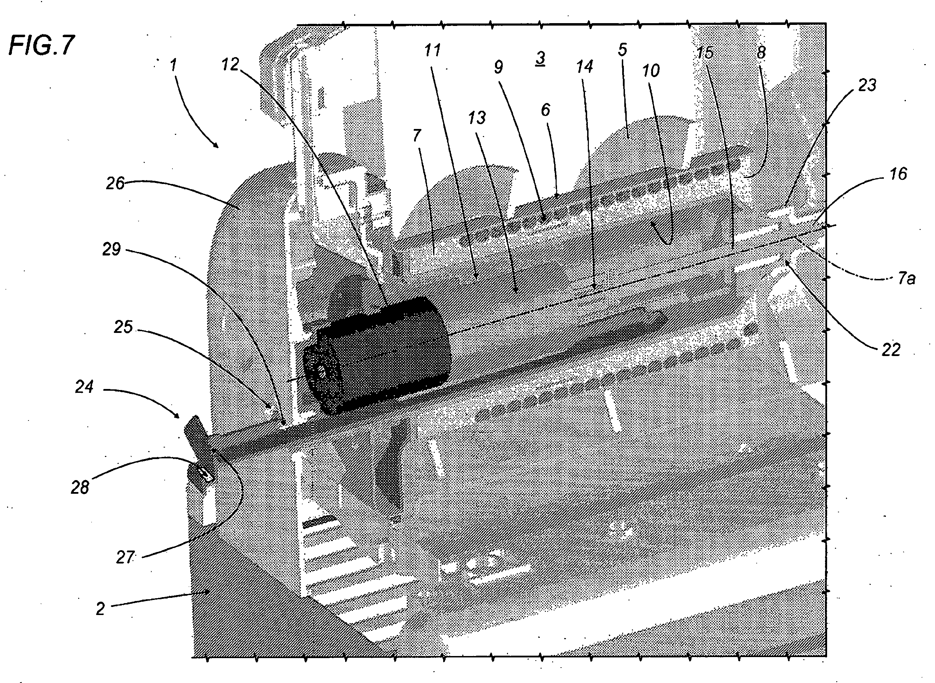

As better illustrated in Figures 6 and 7, the shaft 14 has fixed to it an extension 15 formed by an auxiliary cylindrical rod, also forming part of the drive transmission means 18. The rod 15 also extends longitudinally along the axis 7a and, with one end of it 16, which drives the stirring element 5, sealingly protrudes from the wall 8. Around the end 16 there is an annular seal 22 (Figure 7) interposed between the wall 8 and a housing 23 of the stirring element 5, in which the end 16 is inserted and locked.

That way, the product being processed in the tank 3 is prevented from penetrating into the cavity 10.

In a variant that is not illustrated, there is no extension 15 and the shaft 14 itself, of suitable length, sealingly protrudes from the wall 8 with one end of it which drives the stirring element 5 The motor 12 is connected coaxially to the reduction gear unit 13 and is also at least partly housed in the evaporator 6, that is, in the cavity 10.

The motor 12 faces the back of the machine 1 and the reduction gear unit 13 faces the front of the machine 1. The motor 12 may be housed entirely in the cavity 10, or as shown in Figures 1, 2, 6 and 7, the rear of it, for example only the part with the power supply terminals, may protrude. Preferably, the motor 12 and the reduction gear unit 13 are of commercial type, preassembled in one piece housed at least partly inside the evaporator, that is, inside the cavity 10. More specifically, the motor 12 and the reduction gear unit 13 are preassembled in one piece having an outer containment casing 19 which is housed partly or totally in the cavity 10. In other words, the casing 19, if present, contains both the motor 12 and the reduction gear unit 13 and may be made in one piece or in two parts attached to each other. Although the cavity 10 is substantially watertight, small quantities of the product being processed may leak into the cavity 10 through the seal 22.

For removing these deposits of liquid inside the cavity 10 a collector 24 is provided.

The collector 24 is in the form of a long collecting tray, which is located on the bottom of the evaporator cavity 10 and which can be removed from the rear of the machine 1, in particular through a hole 25 in a substantially vertical rear shoulder 26 of the machine 1.

When in position inside the evaporator 6, the tray is set a slight angle, with the rear end lower than the front end, in such a way that any liquid deposit flows towards the rear end. An opening 27 at the rear end, corresponding to the maximum permissible level, allows liquid to overflow from the tray into an auxiliary chamber 28 of the collector 24, located on the outside of the shoulder 26. Thus, the operator can easily see when the tray needs to be extracted and emptied. The tray is held in the collection position by an engagement tooth 29 which the operator must lift to allow the tray to be pulled out of the evaporator 6.

The use of a brushless motor has several advantages.

One of these is due to the compact dimensions, lighter weight and lower operating temperature, which improves the cooling efficiency of the machine.

Another advantage is the fact that a brushless motor has a very low inertia and can be driven electronically, with a high dynamic response More specifically, through the control unit it is possible to increase or decrease the speed of the motor and/or reverse its direction of rotation according to predetermined programs and/or feedback based on signals from sensors and/or manually by the operator, with prompt response times. That means the density of the product being processed can be easily controlled electronically. Further, the epicyclic reduction gear unit can support high loads on the output shaft and can transfer high torque to the stirring element, making it suitable for the preparation of particularly dense products. To this must be added the fact that the epicyclic reduction gear unit is very compact and offers the same performance in both directions of rotation. With regard to the latter aspect, the epicyclic reduction gear unit effectively optimizes performance during reversal .or electric motor drive, when required. In a variant that is not illustrated, there is no epicyclic reduction gear unit 13 and the drive transmission means 18 comprise a plain shaft connecting the electric motor 12 to the stirring element 5. This connecting shaft extends along the axis 7a, inside the cavity 10, and the end of it that drives the stirring element 5 sealingly protrudes from the wall 8. In this case, depending on the longitudinal dimensions of the motor 12, of the evaporator 6 and of the connecting shaft itself, the motor 12 may be fully or only partly housed in the cavity 10. In this case, too, the drive unit 11 is housed at least partly in the evaporator 6, that is, inside the cavity 10, with evident advantages in terms of space occupied.

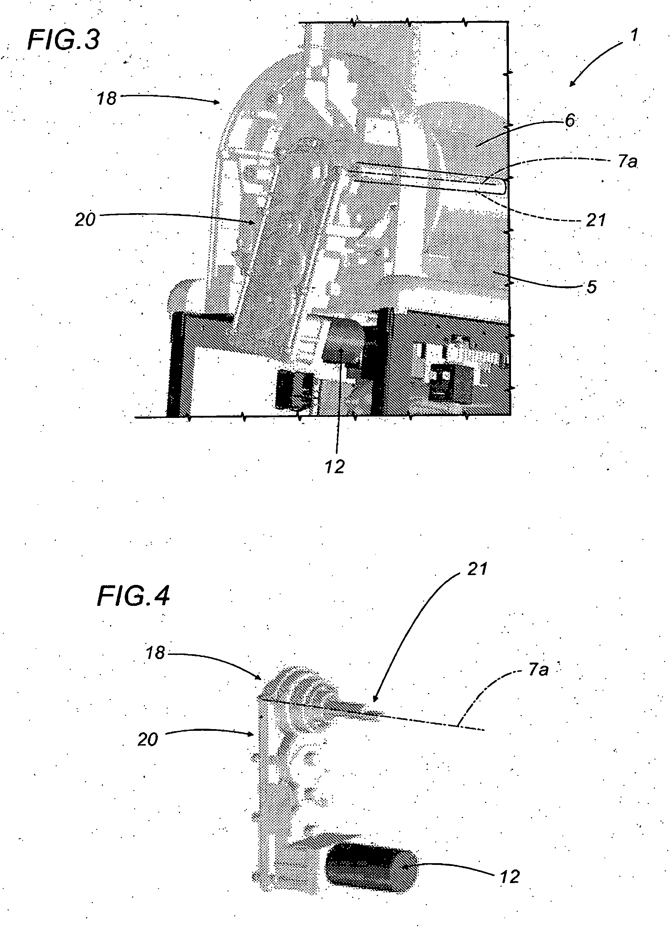

In another variant, illustrated in Figures 3 and 4, where the electric motor 12 is, again, a brushless direct current motor, the drive transmission means 18 comprise a parallel gear speed reducer 20 connected to the output of the motor 12 and a shaft 21 connecting the speed reducer 20 to the stirring element 5. The connecting shaft 21 extends along the axis 7a, inside the cavity 10, and the end of it that drives the stirring element 5 sealingly protrudes from the wall 8.

The invention described has evident industrial applications and can be modified and adapted in several ways without thereby departing from the scope of the inventive concept. Moreover, all the details of the invention may be substituted by technically equivalent elements. It should also be noted that a solution of this type can be extended to machines with two or more tanks, and thus, two or more dispensers, two or more motors and so on.

## Claims

1. A machine for making and dispensing iced food products such as granitas, slush drinks and the like; the machine (1) comprising at least a tank (3) for containing and processing the product to be dispensed, a dispensing tap (4) located on the front of the machine (1) near the bottom of the tank (3), an evaporator (6) of a refrigerating circuit and a stirring element (5) both located inside the tank (3), and a drive unit (11) for driving the stirring element (5); the evaporator (6) having a substantially cylindrical shape, hollow inside; the stirring element (5) extending coaxially around the outside of the evaporator (6) and being rotationally driven about the evaporator (6) by the drive unit (11); the machine (1) comprises a direct current electric motor (12) and drive transmission means (18) interposed between the electric motor (12) and the stirring element (5); **characterized in that** the electric motor (12) is coaxially connected to the drive transmission means (18) **and is at least partly housed inside the evaporator (6).**

2. The machine according to claim 1, **characterized in that** the drive unit (11) is at least partly housed inside the evaporator (6).

3. The machine according to claim 1, **characterized in that** the drive transmission means (18) are at least partly housed inside the evaporator (6).

4. The machine according to any of the claims from 1 to 3, **characterized in that** the drive transmission means (18) comprise a connecting shaft between the electric motor (12) and the stirring element (5).

5. The machine according to claim 4, **characterized in that** one end of the connecting shaft, for driving the stirring element (5), sealingly protrudes from a front wall (8) of the evaporator (6).

6. The machine according to any of the claims from 1 to 3, **characterized in that** the drive transmission means (18) comprise a speed reducer (13; 20).

7. The machine according to claim 6, **characterized in that** the speed reducer comprises an epicyclic reduction gear unit (13).

8. The machine according to claim 7, **characterized in that** the epicyclic reduction gear unit (13) is completely housed inside the evaporator (6) with its output shaft (14) coaxial with the evaporator (6).

9. The machine according to claim 8, **characterized in that** one end (16) of the output shaft (14), or an extension (15) of it, for driving the stirring element, sealingly protrudes from a front wall (8) of the evaporator.

10. The machine according to any of the foregoing claims from 1 to 9, **characterized in that** the drive unit (11) and the drive transmission means (18) are pre-assembled in a single body having an outer containment casing (19); also being **characterized in that** the electric motor (12) and the epicyclic reduction gear unit (13) are pre-assembled in a single body having an outer containment casing (19); the casing (19) being at least partly inserted in the cavity (10) inside the evaporator (6).

11. The machine according to any of the claims from 1 to 10, **characterized in that** it comprises a liquid collector (24) in the form of a long collecting tray, located inside and on the bottom of the evaporator (6) and which can be removed from the evaporator (6) at the rear of the machine (1).

12. The machine according to claim 11, **characterized in that**, in its position inside the evaporator (6), the long collecting tray is set at an angle, with its rear end lower than its front end.

13. The machine according to claim 12, **characterized in that** the collector (24) comprises an auxiliary chamber (28) and an opening made, at a height corresponding to the maximum permissible level, in the rear end of the tray, allowing the liquid to overflow from the tray to the auxiliary chamber (28); the auxiliary chamber (28) being located outside a rear shoulder (26) of the machine (1) when the tank is in its position inside the evaporator (6).

14. The machine according to any of the foregoing claims from 1 to 13, **characterized in that** the direct current electric motor (12) is a brushless motor.

## Patentansprüche

1. Maschine zum Herstellen und Ausgeben von gefrorenen Nahrungsmittelprodukten wie Granita, halbgefrorenem Trinkeis und Ähnlichem, wobei die Maschine (1) mindestens einen Behälter (3) umfasst, um das auszugebende Produkt zu enthalten und zu verarbeiten, einen Ausgabehahn (4), der sich an der Vorderseite der Maschine (1) in der Nähe des Bodens des Behälters (3) befindet, einen Verdampfer (6) eines Kühlkreises und ein Rührelement (5), die beide im Behälter (3) angeordnet sind, und eine Antriebseinheit (11), um das Rührelement (5) zu steuern, wobei der Verdampfer (6) eine im Wesentlichen zylindrische Form aufweist, die innen hohl ist, wobei sich das Rührelement (5) koaxial rund um die Außenseite des Verdampfers (6) erstreckt und von der Antriebseinheit (11) drehend um den Verdampfer (6) gesteuert wird, wobei die Maschine (1) einen Direktstromelektromotor (12) und Antriebsübertragungsmittel (18) umfasst, die zwischen dem Elektromotor (12) und dem Rührelement (5) eingesetzt sind, **dadurch gekennzeichnet, dass** der Elektromotor (12) koaxial mit den Antriebsübertragungsmitteln (18) verbunden und mindestens teilweise im Verdampfer (6) untergebracht ist.

2. Maschine nach Anspruch 1, **dadurch gekennzeichnet, dass** die Antriebseinheit (11) mindestens teilweise im Verdampfer (6) untergebracht ist.

3. Maschine nach Anspruch 1, **dadurch gekennzeichnet, dass** die Antriebsübertragungsmittel (18) mindestens teilweise im Verdampfer (6) untergebracht sind.

4. Maschine nach einem der Ansprüche 1 bis 3, **dadurch gekennzeichnet, dass** die Antriebsübertragungsmittel (18) eine Verbindungswelle zwischen dem Elektromotor (12) und dem Rührelement (5) umfassen.

5. Maschine nach Anspruch 4, **dadurch gekennzeichnet, dass** das eine Ende der Verbindungswelle zum Antrieb des Rührelements (5) abdichtend aus einer frontseitigen Wand (8) des Verdampfers (6) hervorsteht.

6. Maschine nach einem der Ansprüche 1 bis 3, **dadurch gekennzeichnet, dass** die Antriebsübertragungsmittel (18) ein Reduziergetriebe (13; 20) umfassen.

7. Maschine nach Anspruch 6, **dadurch gekennzeichnet, dass** das Reduziergetriebe eine Planetengetriebeeinheit (13) umfasst.

8. Maschine nach Anspruch 7, **dadurch gekennzeichnet, dass** die Planetengetriebeeinheit (13) vollständig im Verdampfer (6) untergebracht ist und ihre Abtriebswelle (14) koaxial zum Verdampfer (6) angeordnet ist.

9. Maschine nach Anspruch 8, **dadurch gekennzeichnet, dass** das eine Ende (16) der Abtriebswelle (14) oder eine Verlängerung (15) davon zum Antrieb des Rührelements abdichtend aus einer frontseitigen Wand (8) des Verdampfers hervorsteht.

10. Maschine nach einem der vorhergehenden Ansprüche 1 bis 9, **dadurch gekennzeichnet, dass** die Antriebseinheit (11) und die Antriebsübertragungsmittel (18) in einem einzigen Körper vormontiert sind, aufweisend ein äußeres Behältergehäuse (19), zudem **dadurch gekennzeichnet, dass** der Elektromotor (12) und die Planetengetriebeeinheit (13) in einem einzigen Körper vormontiert sind, aufweisend ein äußeres Behältergehäuse (19); wobei das Gehäuse (19) zumindest teilweise in den Hohlraum (10) im Verdampfer (6) eingefügt ist.

11. Maschine nach einem der Ansprüche 1 bis 10, **dadurch gekennzeichnet, dass** sie einen Flüssigkeitssammler (24) in Form einer langen Sammelablage umfasst, die innenseitig und am Boden des Verdampfers (6) angeordnet ist und vom Verdampfer (6) an der Rückseite der Maschine (1) entfernt werden kann.

12. Maschine nach Anspruch 11, **dadurch gekennzeichnet, dass** die lange Sammelablage in ihrer Position im Verdampfer (6) in einem Winkel angeordnet ist und ihr rückseitiges Ende niedriger ist als ihr frontseitiges Ende.

13. Maschine nach Anspruch 12, **dadurch gekennzeichnet, dass** der Sammler (24) eine Kammer (28) und eine Öffnung umfasst, die auf einer Höhe ausgebildet ist, die dem maximal zulässigen Pegel entspricht und am rückseitigen Ende der Ablage angeordnet ist, die der Flüssigkeit erlaubt, aus der Ablage in die Hilfskammer (28) überzulaufen, wobei sich die Hilfskammer (28) außerhalb einer rückseitigen Schulter (26) der Maschine (1) befindet, wenn sich der Behälter in seiner Position im Verdampfer (6) befindet.

14. Maschine nach einem der vorhergehenden Ansprüche 1 bis 13, **dadurch gekennzeichnet, dass** der Direktstromelektromotor (12) ein bürstenloser Motor ist.

## Revendications

1. Machine pour la fabrication et la distribution de produits alimentaires glacés tels que des granités, des barbotines et similaires ; la machine (1) comprenant au moins un réservoir (3) servant à contenir et à traiter le produit à distribuer, un robinet de distribution (4) situé à l'avant de la machine (1) situé à proximité du réservoir (3), un évaporateur (6) d'un circuit réfrigérant et un élément agitateur (5) tous deux situés à l'intérieur du réservoir (3), et une unité d'entraînement (11) pour entraîner l'élément agitateur (5) ; l'évaporateur (6) ayant une forme substantiellement cylindrique, creuse à l'intérieur ; l'élément agitateur (5) se prolongeant coaxialement autour de l'extérieur de l'évaporateur (6) et étant entraîné de façon rotative autour de l'évaporateur (6) par l'unité d'entraînement (11) ; la machine (1) comprend un moteur électrique à courant continu (12) et des moyens de transmission d'entraînement (18) interposés entre le moteur électrique (12) et l'élément agitateur (5) ; **caractérisée en ce que** le moteur électrique (12) est relié coaxialement aux moyens de transmission d'entraînement (18) et est au moins en partie logé à l'intérieur de l'évaporateur (6).

2. Machine selon la revendication 1, **caractérisée en ce que** l'unité d'entraînement (11) est au moins partiellement logée à l'intérieur de l'évaporateur (6).

3. Machine selon la revendication 1, **caractérisée en ce que** les moyens de transmission d'entraînement (18) sont au moins partiellement logés à l'intérieur de l'évaporateur (6).

4. Machine selon l'une quelconque des revendications de 1 à 3, **caractérisée en ce que** les moyens de transmission d'entraînement (18) comprennent un arbre de liaison entre le moteur électrique (12) et l'élément agitateur (5).

5. Machine selon la revendication 4, **caractérisée en ce qu'**une extrémité de l'arbre de liaison, servant à entraîner l'élément agitateur (5), dépasse de façon hermétique d'une paroi antérieure (8) de l'évaporateur (6).

6. Machine selon l'une quelconque des revendications 1 à 3, **caractérisée en ce que** les moyens de transmission d'entraînement (18) comprennent un réducteur de vitesse (13 ; 20).

7. Machine selon la revendication 6, **caractérisée en ce que** le réducteur de vitesse comprend un engrenage réducteur épicyclique (13).

8. Machine selon la revendication 7, **caractérisée en ce que** l'engrenage réducteur épicyclique (13) est complètement logé à l'intérieur de l'évaporateur (6) avec son arbre de sortie (14) coaxial à l'évaporateur (6).

9. Machine selon la revendication 8, **caractérisée en ce qu'**une extrémité (16) de l'arbre de sortie (14) ou une extension (15) de celui-ci, servant à entraîner l'élément agitateur, dépasse de façon hermétique d'une paroi antérieure (8) de l'évaporateur.

10. Machine selon l'une quelconque des revendications précédentes de 1 à 9, **caractérisée en ce que** l'unité d'entraînement (11) et les moyens de transmission d'entraînement (18) sont préassemblés en un seul corps comportant une enveloppe de contenance externe (19) ; étant aussi **caractérisée en ce que** le moteur électrique (12) et l'engrenage réducteur épicyclique (13) sont préassemblés en un seul corps comportant une enveloppe de contenance externe (19) ; l'enveloppe (19) étant au moins partiellement insérée dans la cavité (10) à l'intérieur de l'évaporateur (6).

11. Machine selon l'une quelconque des revendications de 1 à 10, **caractérisée en ce qu'**elle comprend un collecteur de liquide (24), se présentant sous la forme d'un long bac de récupération, situé à l'intérieur et sur le fond de l'évaporateur (6) et pouvant être retiré de l'évaporateur (6) à l'arrière de la machine (1).

12. Machine selon la revendication 11, **caractérisée en ce que**, dans sa position à l'intérieur de l'évaporateur (6), le long bac de récupération est fixé à un angle avec son extrémité arrière inférieure à son extrémité antérieure.

13. Machine selon la revendication 12, **caractérisé en ce que** le collecteur (24) comprend une chambre (28) et une ouverture réalisée, à une hauteur correspondant au niveau maximum acceptable, dans l'extrémité arrière du bac, permettant au liquide de déborder du bac vers la chambre auxiliaire (28) ; la chambre auxiliaire (28) étant située à l'extérieur d'un épaulement postérieur (26) de la machine (1) lorsque le réservoir se trouve dans sa position à l'intérieur de l'évaporateur (6).

14. Machine selon l'une quelconque des revendications précédentes de 1 à 13, **caractérisée en ce que** le circuit électrique à courant continu (12) est un moteur sans balai.
